# EUROPÄISCHE PATENTSCHRIFT

(11) **EP 2 627 924 B1**
(45) Veröffentlichungstag und Bekanntmachung des Hinweises auf die Patenterteilung: **22.04.2015**
(21) Anmeldenummer: 11770048.4
(22) Anmeldetag: 28.09.2011
(51) Int. Cl.: F16F 1/02, F16F 1/06, F16F 1/04, F16F 1/12

(54) **DREHFEDER**
TORSION SPRING
RESSORT DE TORSION

(30) Priorität: 13.10.2010 DE 102010048182
(43) Veröffentlichungstag der Anmeldung: 21.08.2013
(73) Patentinhaber: TrelleborgVibracoustic GmbH, 64293 Darmstadt (DE)
(72) Erfinder: ECKEL, Hans-Gerd, 69514 Laudenbach (DE); EHRT, Tobias, 64625 Bensheim (DE); MARTINI, Patrick, 75203 Königsbach (DE)
(74) Vertreter: Flügel Preissner Kastel Schober
(86) Internationale Anmeldenummer: PCT/EP2011/004841
(87) Internationale Veröffentlichungsnummer: WO 2012/048803

(56) Entgegenhaltungen:
- DE-A1- 2 923 270
- DE-A1-102008 017 626
- JP-A- 1 299 336
- US-A1- 2008 171 622

## Beschreibung

### Technisches Gebiet

Die Erfindung betrifft eine Drehfeder, umfassend schraubengangförmige Federwindungen.

### Stand der Technik

Eine solche Drehfeder ist aus der DE 10 2008 017 626 A1 bekannt. Die vorbekannte Drehfeder umfasst eine Antriebsscheibe und eine Abtriebsscheibe, die gegen die Rückstellkraft der schraubengangförmigen Federwindungen relativ zueinander um eine Drehachse verdrehbar sind, wobei die Federwindungen, die Antriebsscheibe und die Abtriebsscheibe die Drehachse der Drehfeder konzentrisch umschließen und wobei die Federwindungen während der bestimmungsgemäßen Verwendung der Drehfeder radial aufweitbar oder kontrahierbar sind.

Es wurde festgestellt, dass Drehfedern während ihrer bestimmungsgemäßen Verwendung, also in dem Bereich der Drehmomente, die übertragen werden sollen, häufig nicht die herstellungsbedingte ebene Form behalten, sondern dass sie sich in axialer Richtung unerwünscht verformen. Diese Verformung ist ein konisches Aufstellen, im Weiteren als Tellern bezeichnet. Dieses Tellern, über das äußere Lastmoment aufgetragen, lässt sich in zwei Abschnitte aufteilen. Einen ersten Abschnitt bis zu einem kritischen Lastmoment mit kleiner Verformung und einen zweiten Abschnitt oberhalb des kritischen Lastmoments mit großer Verformung. Bei Kontraktion der Drehfeder entstehen in den Federwindungen radial außen tangentiale Zugspannungen und radial innen tangentiale Druckspannungen, die zusammen mit einer kleinen geometrischen Abweichung von der Idealkontur, einem Vortellern, die Ursache für das Tellern der Federwindungen der Drehfeder aus ihrer ebenen Lage sind.

### Darstellung der Erfindung

Der Erfindung liegt die Aufgabe zugrunde, eine Drehfeder der vorbekannten Art derart weiter zu entwickeln, dass das Tellern der Drehfeder während ihrer bestimmungsgemäßen Verwendung bis zur Nennlast, zum Beispiel dem 1,2-fachen maximalen Motormoment, nur mit kleiner Verformung einhergeht und damit eine hohe Isolierfähigkeit von Drehschwingungen erreicht wird.

Gelöst wird diese Aufgabe durch die Merkmale von Anspruch 1. Auf eine vorteilhafte Ausgestaltung nimmt Anspruch 2 Bezug.

Zur Lösung der Aufgabe ist eine Drehfeder vorgesehen, umfassend schraubengangförmige Federwindungen, wobei jede Federwindung ein Verhältnis V aus radialer Höhe und axialer Breite aufweist, das 4 bis 6 beträgt, wobei die Drehfeder bis zu einem Verdrehwinkel ϕ von bis zu 80° verdrehbar ist und eine Drehfederrate c von 4 Nm/° bis 16 Nm/° aufweist und wobei die sich an einem umgebenden Gehäuse abstützende Spreizkraft F der Drehfeder bei dem zuvor genannten Verdrehwinkel ϕ höchstens 150 N beträgt.

Das maximale äußere Lastmoment M der zuvor beschriebenen Drehfeder beträgt bevorzugt etwa 600 Nm.

Der zuvor zum Stand der Technik beschriebene unerwünschte Übergang des Tellerns mit kleiner zu großer Verformung der schraubengangförmigen Federwindungen ist vom Höhen/Breiten-Verhältnis V einer jeden Federwindung abhängig. Abhängig vom Verhältnis V aus radialer Höhe zu axialer Breite einer jeden Federwindung entstehen zwei unterschiedliche Verformungen der Federwindungen.

Ist das Verhältnis V > 6, entsteht ein so genanntes Tellern, das heißt, der Außenumfang der Federwindungen stellt sich, bezogen auf den Innenumfang der Windungen, in axialer Richtung auf, so dass die Federwindungen entsprechend verkippt im Einbauraum angeordnet sind; die Federwindungen weisen praktisch die Form einer Tellerfeder auf.

Ist das Verhältnis V demgegenüber < 4, entsteht ein Umfangswellen, das heißt, die Federwindungen verformen sich, in Umfangsrichtung betrachtet, wellenförmig. Sowohl das Tellern als auch das Umfangswellen sind im Bereich der Drehmomente, die übertragen werden sollen, unerwünscht, weil sich durch die axiale Verformung der Federwindungen unerwünscht hohe axiale Spreizkräfte F im Einbauraum der Drehfeder ergeben. Diese axialen Spreizkräfte F führen zu unzulässig hohen Reibkräften bzw. Reibmomenten zum einen in der Drehfelder (innere Reibung) und zum anderen in dem umgebenden Gehäuse (äußere Reibung).

Reibungsarmut der Drehfelder ist jedoch Voraussetzung für eine hohe Isolierfähigkeit von Drehschwingungen. Bei einem Verdrehwinkel ϕ von etwa 50° und einem Höhen/Breiten-Verhältnis V von etwa 9 kann die axiale Spreizkraft F zum Beispiel auf 20 kN anwachsen. Ein ähnlicher Wert für die axiale Spreizkraft F ergibt sich, wenn das Verhältnis V bei etwa 2 liegt.

Es hat sich gezeigt, dass das jeweils unerwünschte Tellern oder Umfangswellen der Federwindungen vermieden werden kann, wenn ein Höhen/Breiten-Verhältnis V der Federwindungen einer Drehfeder eingehalten wird, dass 4 bis 6 beträgt.

Bei einem Verhältnis V aus Höhe zu Breite zwischen 4 und 6 werden unerwünschte axiale Verformungen der Drehfeder während der bestimmungsgemäßen Verwendung bei zu übertragendem Drehmoment vermieden, und zwar auch dann, wenn der Verdrehwinkel ϕ bis zu 80° beträgt. Die Drehfederrate c einer solchen Drehfeder beträgt 4 Nm/° bis 16 Nm/°, und die axiale Spreizkraft F der Federwindungen bei dem zuvor genannten Verdrehwinkel ϕ beträgt lediglich 80 N bis 150 N, wobei diese axiale Spreizkraft F während der bestimmungsgemäßen Verwendung einer Drehfeder vernachlässigbar ist.

Bei den zuvor genannten Randbedingungen können sich die einzelnen Federwindungen im Rahmen der Spiele zwischen den Federwindungen verformen. Erst wenn diese Spiele aufgebraucht sind und die einzelnen Federwindungen sich aufeinander abstützen, formieren sich die Federwindungen und Verkippen/Tellern im Verbund. Erst nach diesem Formieren wird eine sehr hohe Axialkraft aufgebaut.

Bei einem äußeren Lastmoment, das größer als die Nennlast, zum Beispiel dem 1,2-fachen maximalen Motormoment, ist, ist es vorteilhaft, dass das Tellern gewollt auftritt, um eine hohe Drehdämpfung bereitzustellen. Solche großen äußeren Lastmomente entstehen zum Beispiel dann, wenn der Fahrer eines Kraftfahrzeugs bei eingelegtem Gang versehentlich von der getretenen Kupplung abrutscht.

### Kurzbeschreibung der Zeichnung

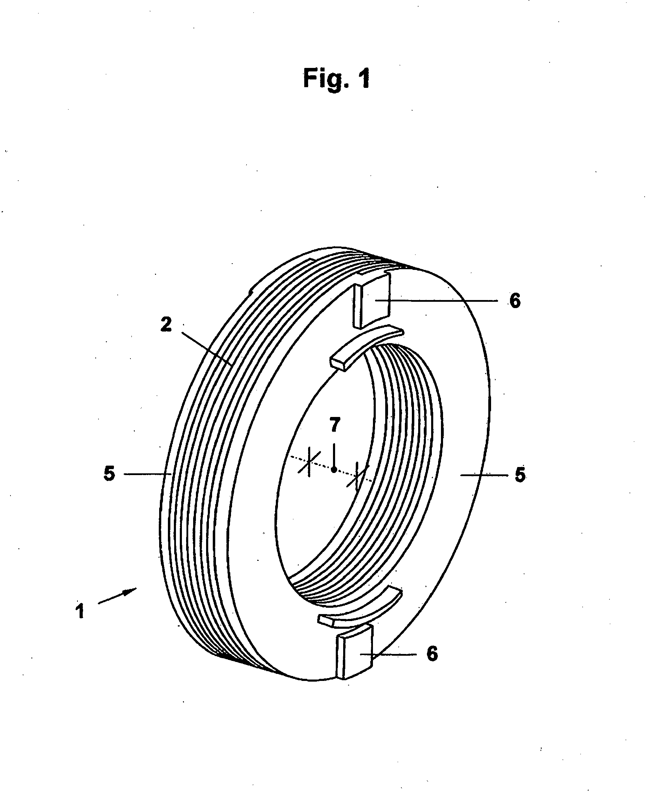

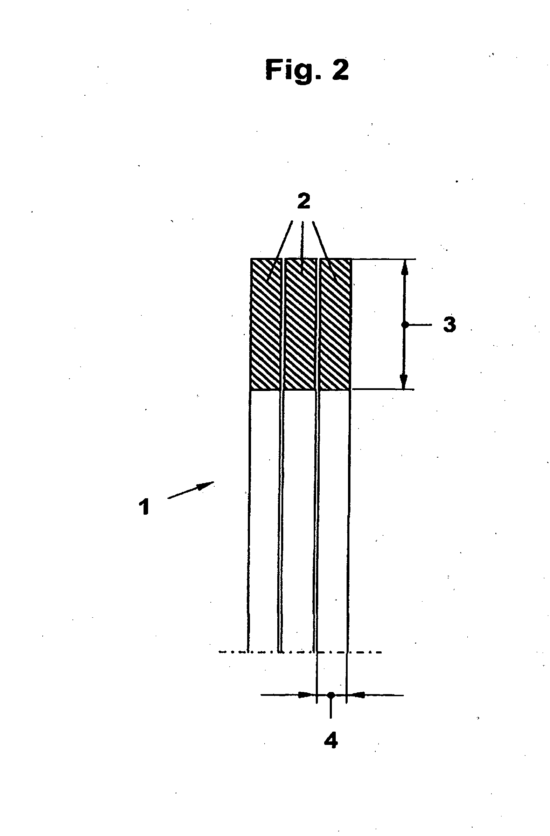

Ein Ausführungsbeispiel der erfindungsgemäßen Drehfeder wird nachfolgend anhand der Figuren 1 und 2 näher erläutert. Diese Figuren zeigen in schematischer Darstellung:
- Figur 1: ein Ausführungsbeispiel einer Drehfeder in einer perspektivischen Ansicht,
- Figur 2: einen Ausschnitt aus der Drehfeder aus Figur 1 im Schnitt.

### Ausführung der Erfindung

In Figur 1 ist ein Ausführungsbeispiel einer erfindungsgemäßen Drehfeder 1 gezeigt. Die Drehfeder 1 umfasst mehrere schraubengangförmige Federwindungen 2, wobei jede Federwindung 2, wie in Figur 2 gezeigt, ein Verhältnis V aus radialer Höhe 3 und axialer Breite 4 aufweist, das 5 beträgt.

Bei einem Verdrehwinkel ϕ von 70° weist die gezeigte Drehfeder eine Drehfederrate c von 12 Nm/° auf und die sich an einem umgebenden Gehäuse abstützende axiale Spreizkraft F beträgt bei dem genannten Verdrehwinkel ϕ weniger als 100 N.

Das übertragene Lastmoment der Drehfeder 1 beträgt hierbei etwa 600 Nm.

Die Federwindungen 2 sind durch stirnseitig beiderseits angeordnete Koppelringe 5 begrenzt, die jeweils mit Nocken 6 versehen sind. Die Koppelringe 5 sind axial beidseitig stoffschlüssig mit den jeweiligen Federwindungen 2 verbunden. Die Drehachse ist mit dem Bezugszeichen 7 versehen.

In Figur 2 ist ein Ausschnitt aus der Drehfeder 1 aus Figur 1 gezeigt. Das Verhältnis V aus radialer Höhe 3 und axialer Breite 4 beträgt 5. Die Drehfeder 1 ist unter einem Verdrehwinkel ϕ von 70° vorgespannt und die Drehfederrate c beträgt 12 Nm/°.

## Patentansprüche

1. Drehfeder (1), umfassend schraubengangförmige Federwindungen (2), wobei jede Federwindung (2) ein Verhältnis V aus radialer Höhe (3) und axialer Breite (4) aufweist, das 4 bis 6 beträgt, wobei die Drehfeder (1) bis zu einem Verdrehwinkel ϕ von bis zu 80° verdrehbar ist und eine Drehfederrate c von 4 Nm/° bis 16 Nm/° aufweist und wobei die sich an einem umgebenden Gehäuse abstützende Spreizkraft F der Drehfeder bei dem zuvor genannten Verdrehwinkel ϕ höchstens 150 N beträgt.

2. Drehfeder (1) nach Anspruch 1, **dadurch gekennzeichnet, dass** das maximale äußere Lastmoment M etwa 600 Nm beträgt.

## Claims

1. Torsion spring (1) comprising screw-thread like spring windings (2), each spring winding (2) having a ratio V between radial height (3) and the axial width (4) which is between 4 to 6, wherein the torsion spring (1) is rotatable about a torsion angle ϕ of up to 80° and has a spring rate c of 4 Nm/° to 16 Nm/° and wherein the expansion force F of the torsion spring (1) exerted on the surrounding housing has a maximum of 150 N when rotated according to the previously mentioned torsion angle ϕ.

2. Torsion spring (1) according to claim 1, **characterised in that**, the external load moment M has a maximum of 600 Nm.

## Revendications

1. Ressort de torsion (1) comprenant des spires de ressort en forme de pas de vis (2), telles que chaque spire de ressort (2) présente un rapport V de sa hauteur radiale (3) sur sa largeur axiale (4) qui s'élève de 4 à 6, dans lequel le ressort de torsion (1) est susceptible d'être mis sous torsion avec un angle de torsion ϕ allant jusqu'à 80°, et présente une constante élastique en torsion c de 4 Nm/° jusqu'à 16 Nm/°, et dans lequel la force d'écartement F, en appui sur un boîtier qui l'entoure, du ressort de torsion est au maximum de 150 N pour l'angle de torsion ϕ précédemment cité.

2. Ressort de torsion (1) selon la revendication 1, **caractérisé en ce que** le moment de charge extérieure maximum M est d'environ 600 Nm.
